# EUROPEAN PATENT APPLICATION

(11) **EP 3 185 162 A1**
(43) Date of publication of application: **28.06.2017**
(21) Application number: 15833692.5
(22) Date of filing: 28.04.2015
(51) Int. Cl.: G06F 21/32, G10L 15/02, G10L 15/06

(54) **AUTHENTICATION METHOD, TERMINAL AND COMPUTER STORAGE MEDIUM BASED ON VOICEPRINT CHARACTERISTIC**

(30) Priority: 20.08.2014 CN 201410413286
(71) Applicant: ZTE Corporation, Shenzhen, Guangdong 518057 (CN)
(72) Inventor: LIU, Xueqin, Shenzhen Guangdong 518057 (CN)
(74) Representative: Brevalex
(86) International application number: PCT/CN2015/077702
(87) International publication number: WO 2016/026325

(57) **Abstract**

A secure authentication method based on a voiceprint characteristic, the method comprising: upon receiving a voice acquisition instruction, a terminal acquires to-be-measured voice data recorded by a user; extracting a voiceprint characteristic of the to-be-measured voice data to obtain voiceprint characteristic information; and according to the currently extracted voiceprint characteristic information and pre-stored voiceprint characteristic information, authenticating the identity of the current user. Also disclosed are a corresponding terminal and computer storage medium.

## Description

### TECHNICAL FIELD

The present disclosure relates to voiceprint identification technologies, and in particular to a method for voiceprint-characteristic-based security authentication, a terminal, and a computer-readable storage medium.

### BACKGROUND

At present, voice identification applies increasingly widely to mobile terminals. There is an increasing stress on security of a mobile terminal based on voice identification.

Existing security authentication based on voice identification may be implemented as follows.

A voice identification mode may be activated to collect a voice instruction. The collected voice instruction may be compared with a pre-stored voice instruction. When a matching measure between the collected voice instruction and the pre-stored voice instruction reaches a pre-set threshold, identity of a user is authenticated.

The existing security authentication based on voice identification is disadvantageous as follows.

No security authentication based on a voiceprint characteristic of a user exists. That a voice instruction tends to be cracked easily poses a security risk to a terminal. The voiceprint characteristic refers to correlative characteristics representing identity of a speaker.

### SUMMARY

In view of this, embodiments herein provide a method for voiceprint-characteristic-based security authentication, a terminal, and a computer-readable storage medium, capable of ensuring security of a terminal based on a voiceprint characteristic.

To this end, a technical solution herein may be implemented as follows.

According to an embodiment herein, a method for voiceprint-characteristic-based security authentication includes:
in response to receiving a voice collecting instruction, collecting, by a terminal, voice data input by a user;
obtaining information on a voiceprint characteristic of the voice data by extracting the voiceprint characteristic of the voice data from the voice data; and
authenticating identity of the user according to the information on the voiceprint characteristic of the voice data and pre-stored voiceprint-characteristic information.

The information on the voiceprint characteristic of the voice data may include a parameter characterizing a degree of retroflexion, a vocal cord characterizing parameter, an oral cavity characterizing parameter, and a nasal sound characterizing parameter.

The authenticating identity of the user according to the information on the voiceprint characteristic of the voice data and pre-stored voiceprint-characteristic information may include:
comparing the information on the voiceprint characteristic of the voice data with the pre-stored voiceprint-characteristic information;
in response to determining that a matching measure between the information on the voiceprint characteristic of the voice data and the pre-stored voiceprint-characteristic information is no less than a pre-set threshold, determining that the identity of the user is authenticated;
in response to determining that the matching measure between the information on the voiceprint characteristic of the voice data and the pre-stored voiceprint-characteristic information is less than the pre-set threshold, determining that the identity of the user is not authenticated.

The pre-stored voiceprint-characteristic information may be pre-stored by:
collecting model voice data within a pre-set duration;
obtaining information on a voiceprint characteristic of the model voice data by extracting the voiceprint characteristic of the model voice data from the model voice data, and storing the obtained information on the voiceprint characteristic of the model voice data as the pre-stored voiceprint-characteristic information.

The method may include: after the collecting model voice data within a pre-set duration,

extracting at least one catchphrase from the model voice data and storing the at least one catchphrase.

The voice data may be input by the user according to a prompted catchphrase.

An embodiment herein further provides a computer-readable storage medium. The computer-readable storage medium stores therein computer executable instructions for executing the method for voiceprint-characteristic-based security authentication according to an embodiment herein.

Based on the method, an embodiment herein provides a terminal, including a voice collecting unit, a characteristic extracting unit, and an authenticating unit.

The voice collecting unit is arranged for: in response to receiving a voice collecting instruction, collecting voice data input by a user.

The characteristic extracting unit is arranged for: obtaining information on a voiceprint characteristic of the voice data by extracting the voiceprint characteristic of the voice data from the voice data.

The authenticating unit is arranged for: authenticating identity of the user according to the information on the voiceprint characteristic of the voice data and pre-stored voiceprint-characteristic information.

The information on the voiceprint characteristic of the voice data may include a parameter characterizing a degree of retroflexion, a vocal cord characterizing parameter, an oral cavity characterizing parameter, and a nasal sound characterizing parameter.

The authenticating unit may be arranged for:
comparing the information on the voiceprint characteristic of the voice data with the pre-stored voiceprint-characteristic information;
in response to determining that a matching measure between the information on the voiceprint characteristic of the voice data and the pre-stored voiceprint-characteristic information is no less than a pre-set threshold, determining that the identity of the user is authenticated;
in response to determining that the matching measure between the information on the voiceprint characteristic of the voice data and the pre-stored voiceprint-characteristic information is less than the pre-set threshold, determining that the identity of the user is not authenticated.

The terminal may further include
a voice pre-storing unit arranged for: collecting model voice data within a pre-set duration; obtaining information on a voiceprint characteristic of the model voice data by extracting the voiceprint characteristic of the model voice data from the model voice data, and storing the obtained information on the voiceprint characteristic of the model voice data as the pre-stored voiceprint-characteristic information.

The terminal may further include
a catchphrase extracting unit arranged for: extracting at least one catchphrase from the model voice data and storing the at least one catchphrase.

The voice data may be input by the user according to a prompted catchphrase.

With the method for voiceprint-characteristic-based security authentication, the terminal, and the computer-readable storage medium according to embodiments herein, when receiving a voice collecting instruction, a terminal collects voice data input by a user; the terminal obtains information on a voiceprint characteristic of the voice data by extracting the voiceprint characteristic of the voice data from the voice data; the terminal authenticates identity of the user according to the information on the voiceprint characteristic of the voice data and pre-stored voiceprint-characteristic information, ensuring security of the terminal based on a voiceprint characteristic, reducing risk of a voice instruction being cracked.

### BRIEF DESCRIPTION OF THE DRAWINGS

Fig.1 is a flowchart of a method for voiceprint-characteristic-based security authentication according to an embodiment herein.
Fig.2 is a diagram of a structure of a terminal according to an embodiment herein.

### DETAILED DESCRIPTION

With voiceprint identification technologies, also known as speaker identification, a speaker may be identified by extracting, via a voice signal, correlative characteristics representing identity of the speaker. For example, the correlative characteristics can be baseband characteristics reflecting a frequency at which a glottis opens and closes, spectrum characteristics reflecting a size and a shape of an oral cavity and a length of a vocal tract, etc.

According to an embodiment herein, the voiceprint identification technologies is applied to a terminal to ensure security of the terminal based on a voiceprint characteristic. The terminal may be a terminal device with smart application and display, such as a smartphone, a tablet, etc.

According to an embodiment herein, when receiving a voice collecting instruction, a terminal collects voice data input by a user. The terminal obtains information on a voiceprint characteristic of the voice data by extracting the voiceprint characteristic of the voice data from the voice data. The terminal authenticates identity of the user according to the information on the voiceprint characteristic of the voice data and pre-stored voiceprint-characteristic information.

Embodiments herein will be elaborated with reference to the drawings.

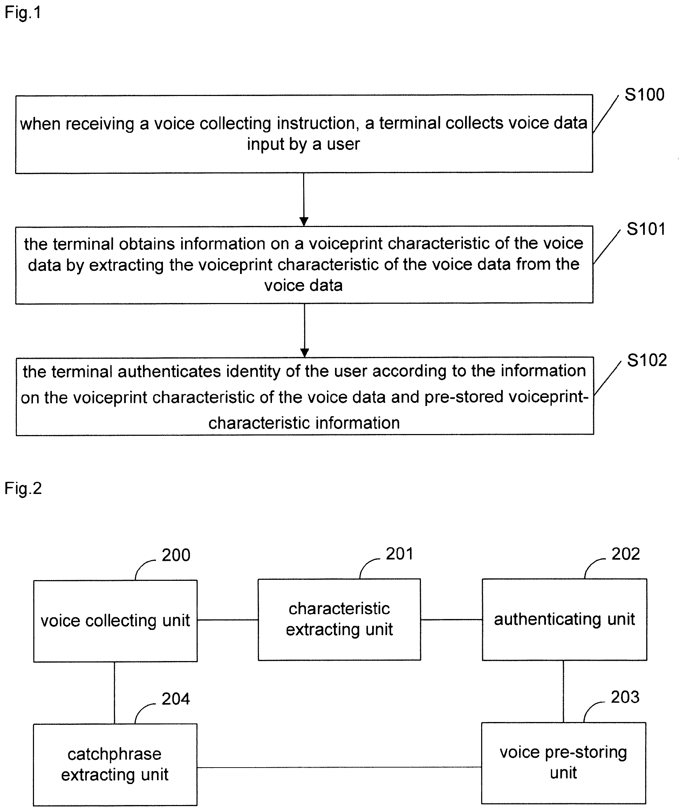

As shown in Fig.1, a method for voiceprint-characteristic-based security authentication includes steps as follows.

In step S100, when receiving a voice collecting instruction, a terminal collects voice data input by a user.

Before receiving the voice collecting instruction, the terminal may have to collect model voice data within a pre-set duration. The user may select a characteristic phrase of interest and input the selected characteristic phrase within the pre-set duration. The terminal may collect the model voice data within the pre-set duration, analyze and extract a voiceprint characteristic of the model voice data according to a voiceprint-characteristic extracting algorithm to obtain the information on the voiceprint characteristic of the model voice data (i.e., voiceprint-characteristic information), and store the information on the voiceprint characteristic of the model voice data in a database as a voiceprint-characteristic matching model (i.e., template). The voiceprint-characteristic extracting algorithm may be set as needed, with no limitation.

After the voiceprint-characteristic information is obtained and stored, at least one catchphrase may be extracted from the model voice data and stored in the database such that the user may input the voice data according to a prompted catchphrase, making the authentication of more fun.

Specifically, a frequency threshold may be pre-set. A term occurring at a frequency no less than the frequency threshold may be set as a catchphrase. A catchphrase occurring at a frequency no less than the frequency threshold may be extracted from the model voice data. For example, a frequency threshold of 2 may be pre-set. If in the model voice data, a term 'basketball' occurs twice, a term 'soccer' occurs three times, and a term 'ping-pong' occurs once, the user may be prompted whether to record the terms 'basketball' and 'soccer' as catchphrases. A user-selected catchphrase may be recorded in the database. When the terminal is triggered to unlock an interface, the user may be prompted of a catchphrase randomly extracted from the database, such that the user may input the voice data according to the prompted catchphrase.

Alternatively, the terminal may collect the model voice data input by the user in real time during standby or user operation. For example, voice data may be input in the terminal using an application thereof, such as WeChat, QQ, etc. The terminal may collect voice data input by the user in real time using WeChat, QQ, etc. The terminal may extract information on a voiceprint characteristic and a catchphrase of the input voice data, and store the extracted information on the voiceprint characteristic and the catchphrase in the database, such that the information on the voiceprint characteristic and the catchphrase may be extracted in real time, making the authentication of more fun.

The information on the voiceprint characteristic may include a parameter characterizing a degree of retroflexion (i.e., articulation with a tongue tip curled back or flattened), a vocal cord characterizing parameter, an oral cavity characterizing parameter, a nasal sound characterizing parameter, etc.

In step S101, the terminal obtains information on a voiceprint characteristic of the voice data by extracting the voiceprint characteristic of the voice data from the voice data.

The voiceprint characteristic of the voice data may be analyzed and extracted according to the voiceprint-characteristic extracting algorithm to obtain the information on the voiceprint.

In step S102, the terminal authenticates identity of the user according to the information on the voiceprint characteristic of the voice data and pre-stored voiceprint-characteristic information.

The terminal may compare the information on the voiceprint characteristic of the voice data with the pre-stored voiceprint-characteristic information.

When determining that a matching measure between the information on the voiceprint characteristic of the voice data and the pre-stored voiceprint-characteristic information is no less than a pre-set threshold, the terminal may determine that the identity of the user is authenticated, and unlock the interface of the terminal.

When determining that the matching measure between the information on the voiceprint characteristic of the voice data and the pre-stored voiceprint-characteristic information is less than the pre-set threshold, the terminal may determine that the identity of the user is not authenticated; the terminal may then end the flow, and prompt the user to input voice data again.

According to an embodiment herein, when receiving a voice collecting instruction, a terminal collects voice data input by a user; the terminal obtains information on a voiceprint characteristic of the voice data by extracting the voiceprint characteristic of the voice data from the voice data; the terminal authenticates identity of the user according to the information on the voiceprint characteristic of the voice data and pre-stored voiceprint-characteristic information, ensuring security of the terminal based on a voiceprint characteristic.

An embodiment herein further provides a computer-readable storage medium. The computer-readable storage medium stores therein computer executable instructions for executing the method for voiceprint-characteristic-based security authentication according to an embodiment herein as shown in Fig.1.

To implement the method, an embodiment herein further provides a terminal. The principle of the terminal solution is similar to that of the method. One may refer to description of implementation and the principle of the method for implementation and the principle of the terminal, which will not be repeated.

As shown in Fig.2, the terminal according to an embodiment herein includes a voice collecting unit 200, a characteristic extracting unit 201, and an authenticating unit 202.

The voice collecting unit 200 is arranged for: in response to receiving a voice collecting instruction, collecting voice data input by a user.

The characteristic extracting unit 201 is arranged for: obtaining information on a voiceprint characteristic of the voice data by extracting the voiceprint characteristic of the voice data from the voice data.

The authenticating unit 202 is arranged for: authenticating identity of the user according to the information on the voiceprint characteristic of the voice data and pre-stored voiceprint-characteristic information.

Information on a voiceprint characteristic (i.e., voiceprint-characteristic information) may include a parameter characterizing a degree of retroflexion (i.e., articulation with a tongue tip curled back or flattened), a vocal cord characterizing parameter, an oral cavity characterizing parameter, a nasal sound characterizing parameter, etc.

Division of the functional units or modules is exemplary and the present disclosure is not limited by that according to an embodiment herein.

The authenticating unit 202 may be arranged for:
comparing the information on the voiceprint characteristic of the voice data with the pre-stored voiceprint-characteristic information;
in response to determining that a matching measure between the information on the voiceprint characteristic of the voice data and the pre-stored voiceprint-characteristic information is no less than a pre-set threshold, determining that the identity of the user is authenticated;
in response to determining that the matching measure between the information on the voiceprint characteristic of the voice data and the pre-stored voiceprint-characteristic information is less than the pre-set threshold, determining that the identity of the user is not authenticated.

The terminal may further include:
a voice pre-storing unit 203 arranged for: collecting model voice data within a pre-set duration; obtaining information on a voiceprint characteristic of the model voice data by extracting the voiceprint characteristic of the model voice data from the model voice data, and storing the obtained information on the voiceprint characteristic of the model voice data as the pre-stored voiceprint-characteristic information.

The terminal may further include:
a catchphrase extracting unit 204 arranged for: extracting at least one catchphrase from the model voice data and storing the at least one catchphrase.

The voice collecting unit 200 may be arranged for: collecting the voice data input by the user according to a prompted catchphrase.

In an actual application, the voice collecting unit 200, the characteristic extracting unit 201, the authenticating unit 202, the voice pre-storing unit 203, the catchphrase extracting unit 204, etc., may be implemented by a Central Processing Unit (CPU), a Micro Processor Unit (MPU), a Digital Signal Processor (DSP), or a Field Programmable Gate Array (FPGA) located on a terminal.

The method described herein is not limited to embodiments described in the detailed description. Those skilled in the art may arrive at other embodiments according to a technical solution herein, which likewise fall within the scope of the present disclosure.

Obviously, those skilled in the art may make various modifications and variations to the present disclosure without departing from the spirit and scope of the present disclosure. Thus, if those modifications and variations of the present disclosure fall within the scope of the claims and equivalent solutions thereof, then the present disclosure is also intended to include such modifications and variations.

### INDUSTRIAL APPLICABILITY

According to an embodiment herein, when receiving a voice collecting instruction, a terminal collects voice data input by a user; the terminal obtains information on a voiceprint characteristic of the voice data by extracting the voiceprint characteristic of the voice data from the voice data; the terminal authenticates identity of the user according to the information on the voiceprint characteristic of the voice data and pre-stored voiceprint-characteristic information, ensuring security of the terminal based on a voiceprint characteristic, reducing risk of a voice instruction being cracked.

## Claims

1. A method for voiceprint-characteristic-based security authentication, comprising:
in response to receiving a voice collecting instruction, collecting, by a terminal, voice data input by a user;
obtaining information on a voiceprint characteristic of the voice data by extracting the voiceprint characteristic of the voice data from the voice data; and
authenticating identity of the user according to the information on the voiceprint characteristic of the voice data and pre-stored voiceprint-characteristic information.

2. The method according to claim 1, wherein the information on the voiceprint characteristic of the voice data comprises a parameter characterizing a degree of retroflexion, a vocal cord characterizing parameter, an oral cavity characterizing parameter, and a nasal sound characterizing parameter.

3. The method according to claim 1, wherein the authenticating identity of the user according to the information on the voiceprint characteristic of the voice data and pre-stored voiceprint-characteristic information comprises:
comparing the information on the voiceprint characteristic of the voice data with the pre-stored voiceprint-characteristic information;
in response to determining that a matching measure between the information on the voiceprint characteristic of the voice data and the pre-stored voiceprint-characteristic information is no less than a pre-set threshold, determining that the identity of the user is authenticated;
in response to determining that the matching measure between the information on the voiceprint characteristic of the voice data and the pre-stored voiceprint-characteristic information is less than the pre-set threshold, determining that the identity of the user is not authenticated.

4. The method according to any one of claims 1-3, wherein the pre-stored voiceprint-characteristic information is pre-stored by:
collecting model voice data within a pre-set duration;
obtaining information on a voiceprint characteristic of the model voice data by extracting the voiceprint characteristic of the model voice data from the model voice data, and storing the obtained information on the voiceprint characteristic of the model voice data as the pre-stored voiceprint-characteristic information.

5. The method according to claim 4, further comprising: after the collecting model voice data within a pre-set duration,
extracting at least one catchphrase from the model voice data and storing the at least one catchphrase,
wherein the voice data are input by the user according to a prompted catchphrase.

6. A terminal, comprising a voice collecting unit, a characteristic extracting unit, and an authenticating unit,
wherein the voice collecting unit is arranged for: in response to receiving a voice collecting instruction, collecting voice data input by a user,
wherein the characteristic extracting unit is arranged for: obtaining information on a voiceprint characteristic of the voice data by extracting the voiceprint characteristic of the voice data from the voice data,
wherein the authenticating unit is arranged for: authenticating identity of the user according to the information on the voiceprint characteristic of the voice data and pre-stored voiceprint-characteristic information.

7. The terminal according to claim 6, wherein the information on the voiceprint characteristic of the voice data comprises a parameter characterizing a degree of retroflexion, a vocal cord characterizing parameter, an oral cavity characterizing parameter, and a nasal sound characterizing parameter.

8. The terminal according to claim 6, wherein the authenticating unit is arranged for:
comparing the information on the voiceprint characteristic of the voice data with the pre-stored voiceprint-characteristic information;
in response to determining that a matching measure between the information on the voiceprint characteristic of the voice data and the pre-stored voiceprint-characteristic information is no less than a pre-set threshold, determining that the identity of the user is authenticated;
in response to determining that the matching measure between the information on the voiceprint characteristic of the voice data and the pre-stored voiceprint-characteristic information is less than the pre-set threshold, determining that the identity of the user is not authenticated.

9. The terminal according to any one of claims 6-8, further comprising
a voice pre-storing unit arranged for: collecting model voice data within a pre-set duration; obtaining information on a voiceprint characteristic of the model voice data by extracting the voiceprint characteristic of the model voice data from the model voice data, and storing the obtained information on the voiceprint characteristic of the model voice data as the pre-stored voiceprint-characteristic information.

10. The terminal according to claim 9, further comprising
a catchphrase extracting unit arranged for: extracting at least one catchphrase from the model voice data and storing the at least one catchphrase,
wherein the voice data are input by the user according to a prompted catchphrase.

11. A computer-readable storage medium, storing therein computer executable instructions for executing the method according to any one of claims 1 to 5.
